(19) Europäisches Patentamt

European Patent Office

Office européen des brevets

(11) **EP 1 092 956 A1**

(12) **EUROPÄISCHE PATENTANMELDUNG**

(43) Veröffentlichungstag:
18.04.2001 Patentblatt 2001/16

(51) Int. Cl.⁷: **G01D 5/20**

(21) Anmeldenummer: 00121091.3

(22) Anmeldetag: 28.09.2000

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **29.09.1999 DE 19946731**

(71) Anmelder:
**Tyco Electronics Logistics AG
9323 Steinach / SG (CH)**

(72) Erfinder:
• **Loge, Hans
85630 Neukeferloh (DE)**
• **Braun, Matthias
97711 Thundorf (DE)**

(74) Vertreter: **Heinz-Schäfer, Marion
AMP International Enterprises Limited
AMPèrestrasse 3
9323 Steinach (SG) (CH)**

(54) **Elektromagnetischer Drehwinkelsensor**

(57)    Die Erfindung betrifft einen elektromagnetischen Drehwinkelsensor zur Erfassung eines Drehwinkels (φ) um eine Achse (1) mit einem um die Achse (1) drehbaren magnetischen Rotor (2) und einem feststehenden Stator (5), der mit dem Rotor (2) einen Luftspalt (4) bildet. Am Stator (5) sind Polpaare von Primärwicklungen (10) und Sekundarspulen (7,8) angeordnet. Der Rotor (2) weist strukturelle Perioden auf, die entsprechend die Reluktanz im Luftspalt (4) variieren. Trotz großer Periodenzahl der Rotorstruktur wird eine Primärwicklung (10) verwendet, die ein mit der Periodenzahl = 1 variierendes Magnetfeld erzeugt, da diese besonders gut als eine einen sinusförmigen Feldverlauf erzeugende Wicklung ausgestaltet werden kann.

FIG 1

**Beschreibung**

Die Erfindung betrifft einen elektromagnetischen Drehwinkelsensor, bei dem der Drehwinkel φ um eine Achse mit Hilfe einer veränderlichen Reluktanz zwischen einem magnetischen Rotor und einem Stator gemessen wird (Reluktanz-Resolver).

Aus DE 197 19 354 A1 sowie aus US 5,757,182 sind Reluktanz-Resolver bekannt, die einen um eine Achse drehbaren magnetischen Rotor und einen dem Rotor einen Luftspalt bildend gegenüberstehenden Stator aufweisen. Der magnetische Widerstand des Luftspalts ändert sich mit dem Drehwinkel des Rotors entweder über eine Variation des Abstands der den Luftspalt begrenzenden Rotoroberfläche von der Drehachse (US) oder über die Ausdehnung des Rotors parallel zur Drehachse (DE). Die Änderung des magnetischen Widerstands des Luftspalts erfolgt dabei periodisch mit einer Periode P. Am Stator sind von einem Wechselstrom durchflossene Primärwicklungen angeordnet, die ein periodisch variierendes magnetisches Feld in Richtung der Drehachse erzeugen. Ferner sind am Stator Sekundärwicklungen angeordnet, die das Magnetfeld im Luftspalt detektieren und deren Wicklungszahl und Wicklungssinn periodisch variiert. Die Periodenzahlen der Primärwicklungen und der Sekundärwicklungen weisen dabei ein festes Verhältnis, entweder 1 : 2 oder 2 : 1, auf. Eine dieser Perioden ist dabei genauso groß, wie die Zahl P der Perioden des magnetischen Widerstands im Luftspalt. In den Sekundärwicklungen wird eine vom Drehwinkel des Rotors abhängige elektrische Spannung induziert. Zur einfacheren Weiterverarbeitung des Spannungssignals ist es erwünscht, daß diese Spannung möglichst sinusförmig vom Drehwinkel des Rotors abhängt. Dies erreicht man durch möglichst exakte sinusförmige Ausgestaltung sowohl der Rotorgeometrie als auch des periodisch variierenden Magnetfeldes.

Bei den genannten Reluktanz-Resolvern besteht das Problem, daß die Meßgenauigkeit des Drehwinkels sich verschlechtert, wenn der Rotor einen herstellungs- bzw. betriebsbedingten unerwünschten seitlichen Versatz von der Drehachse aufweist. Dabei wird die Meßgenauigkeit von diesem seitlichen Versatz weniger verschlechtert, wenn die Zahl der Perioden des magnetischen Widerstands im Luftspalt groß ist. Daher kommen die bekannten Reluktanz-Resolver vorzugsweise mit Rotoren zum Einsatz, die so gestaltet sind, daß die Periode P möglichst groß ist. Entsprechend den oben genannten Verhältnissen der Perioden zueinander ist damit eine Primärwicklung notwendig, die ein periodisches Feld mit entsprechend vielen Perioden erzeugt.

Bei den bekannten Resolvern werden die Primärwicklungen in radial im Stator verlaufende Nuten gewickelt. Diese müssen eine Mindestbreite aufweisen, um maschinell bewickelbar zu sein. Aufgrund der endlichen Baugröße des Stators ist die Zahl der Nuten daher nach oben beschränkt. Bei einer vorgegebenen Höchstzahl von Nuten im Stator wird es mit steigender Periodenzahl zunehmend schwierig, einen entsprechenden sinusförmigen Verlauf des Magnetfeldes bzw. den damit verknüpften Windungszahlen zu realisieren. Im Idealfall ist der magnetische Feldverlauf ebenso wie der Verlauf des magnetischen Widerstandes im Luftspalt streng sinusförmig, um entsprechend vom Drehwinkel φ sinusförmig abhängige Ausgangssignale in den Sekundärspulen zu erhalten. Fällt nun aufgrund einer hohen Periodenzahl das streng sinusförmige Verhalten des periodischen Magnetfeldes der Primärwicklungen weg, so bleibt als einzige die Sinusfunktion repräsentierende Komponente die Form des Rotors übrig. Dadurch werden an die Rotorgeometrie hohe Anforderungen gestellt, insbesondere hinsichtlich geometrischer Form und Homogenität des Materials, was hohe Kosten verursacht.

Ziel der vorliegenden Erfindung ist es daher, einen elektromagnetischen Drehwinkelsensor bereitzustellen, der einen einer Sinusform gut angenäherten Verlauf des Magnetfelds im Luftspalt aufweist und einfach herstellbar ist.

Dieses Ziel wird erfindungsgemäß durch einen elektromagnetischen Drehwinkelsensor nach Anspruch 1 erreicht. Vorteilhafte Ausgestaltungen der Erfindung sind den weiteren Ansprüchen zu entnehmen.

Die Erfindung gibt einen Elektromagnetischen Drehwinkelsensor zur Erfassung eines Drehwinkels φ um eine Achse an mit einem um die Achse drehbaren magnetischen Rotor und einem feststehenden Stator, der Mittel zur Erzeugung eines auf den Rotor gerichteten Magnetfeldes sowie wenigstens vier erste und wenigstens vier zweite Magnetdetektoren zur Detektion des Magnetfeldes aufweist, bei dem der Rotor und der Stator sich so gegenüberstehen, daß sich zwischen ihnen ein vom Magnetfeld durchsetzter Luftspalt ausbildet, bei dem die Empfindlichkeiten der ersten bzw. zweiten Magnetdetektoren entlang eines Kreises Werte aufweisen, die in der Abwicklung des Kreises auf einer Geraden jeweils von einer Sinuskurve mit P3 Perioden einhüllbar sind, bei dem die Amplitude des Magnetfeldes entlang des Kreises Werte aufweist, die in der Abwicklung des Kreises auf einer Geraden von einer Sinuskurve mit P1 Perioden einhüllbar sind, bei dem der magnetische Widerstand des Luftspaltes entlang des Kreises eine Sinuskurve mit P2 Perioden beschreibt, bei dem die den zweiten Magnetdetektoren zugeordnete Sinuskurve aus der den ersten Magnetdetektoren zugeordneten Sinuskurve durch Verschiebung um eine 90°/P3 entsprechende Strecke entlang der Geraden hervorgeht, und bei dem gilt: $P1 \neq P2 \neq P3$ und zugleich entweder $P1 + P2 = P3$ oder $|P1 - P2| = P3$.

Durch die erfindungsgemäße Gestaltung des Verhältnisses der Perioden P1, P2 und P3 ist es nicht notwendig, die Periodizität des Magnetfeldes genauso auszuführen, wie die Periodizität der Variation des magnetischen Widerstands im Luftspalt. Vielmehr repräsentiert das gewählte Verhältnis die bekannten Eigenschaften von trigonometrischen Funktionen, die bei der Produktbildung neue trigonometrische Funktionen mit der Summe bzw. Differenz der ursprünglichen Argumente liefern. Demnach ist es selbst bei hoher Periodenzahl P2 des magnetischen Widerstands möglich, das Magnetfeld in einem sinusförmigen Verlauf mit nur einer Periode auszuführen (P1 = 1). Die Periodenzahl P1 = 1 ist bei gegebener Anzahl von Mitteln zur Erzeugung des Magnetfeldes wesentlich leichter exakt sinusförmig anzunähern, als es höhere Periodenzahlen, insbesondere Periodenzahlen, die den für den magnetischen Widerstand üblichen entsprechen, sind.

Eine mögliche Ausführungsform der Erfindung ist ein Drehwinkelsensor, bei dem sich der Luftspalt zwischen der äußeren Begrenzungsfläche des Rotors und der inneren Begrenzungsfläche des die Form eines Hohlzylinders um die Achse aufweisenden Stators befindet.

Als Mittel zur Erzeugung eines periodischen Magnetfeldes kommen insbesondere Permanentmagneten und magnetische Spulen in Betracht. Als Magnetdetektoren können beispielsweise Hallsonden oder Induktionsspulen verwendet werden.

Der magnetische Widerstand R im Luftspalt kann sich aufgrund einer Variation des Abstands der den Luftspalt begrenzenden Rotoroberfläche von der Achse oder aufgrund einer über den Winkel φ variierenden Ausdehnung des Rotors ändern.

Besonders vorteilhaft ist ein Drehwinkelsensor, bei dem erfindungsgemäß die Sinuskurven in der Form A × sin ( B × φ + C ) darstellbar sind. A, B und C sind dabei von Null verschiedene reelle Zahlen, die ein Strecken der Amplitude (A), eine Änderung der Periodenzahl (B) und ein Verschieben der Sinuskurve (C) bewirken. In dieser Form weisen die Sinuskurven äquidistante Nullstellen auf, was sich auch in der vom Drehwinkel φ abhängigen sinusförmigen Spannung als Nulldurchgang zeigt. Nulldurchgänge sind meßtechnisch immer besonders einfach festzustellen, wodurch es mit einem solchen Drehwinkelsensor besonders leicht möglich ist, die den Nulldurchgang der Sinusfunktion bestimmenden Drehwinkel zu detektieren.

Weiterhin ist ein Drehwinkelsensor besonders vorteilhaft, bei dem die Mittel zur Erzeugung des Magnetfeldes eine oder mehrere stromdurchflossene Primärwicklungen und die Magnetdetektoren erste bzw. zweite Sekundärspulen sind. Die Primärwicklung bzw. Sekundärspulen lassen sich bei einem Stator mit der Form eines Hohlzylinders in äquidistant auf der Innenfläche des Stators angeordneten Nuten besonders einfach erzeugen. Es sind aber auch auf Kunststoffkörper gewickelte Spulen im Luftspalt denkbar. Damit in den Sekundärspulen eine vom Drehwinkel φ abhängige elektrische Spannung induziert wird, ist es erforderlich, daß die Primärwicklungen von einem veränderlichen, vorzugsweise sinusförmig zeitabhängigen elektrischen Strom durchflossen werden. Das oben genannte Verhältnis der Perioden P1, P2 und P3 untereinander wird beispielsweise erfüllt, indem man P1 = 1, P2 = 3 und 93 = 2 wählt. Bei einer üblichen Baugröße für den elektromagnetischen Drehwinkelsensor von etwa 5 bis 10 cm im Durchmesser ist es ohne große Einschränkungen möglich, im Stator die dafür erforderliche relativ hohe Anzahl von zumindest 16 Nuten vorzusehen. Mit Hilfe von auf diese Nuten unterschiedlich gewickelte Primärwicklungen ist es möglich, einen sinusförmigen Magnetfeldverlauf gut anzunähern.

Im folgenden wird die Erfindung anhand von Ausführungsbeispielen und den dazugehörigen Figuren näher erläutert.

Figur 1 zeigt einen erfindungsgemäßen Drehwinkelsensor im schematischen Querschnitt.

Figur 2A zeigt den magnetischen Widerstand des Luftspalts aus Fig. 1, aufgetragen in Abhängigkeit vom Winkel φ.

Figur 2B zeigt das auf die Achse gerichtete Magnetfeld aus Figur 1, aufgetragen in Abhängigkeit vom Winkel φ.

Figur 2C zeigt die Empfindlichkeiten der ersten Magnetsensoren aus Fig. 1, aufgetragen in Abhängigkeit vom Winkel φ.

Figur 2D zeigt die Empfindlichkeiten der zweiten Magnetsensoren aus Fig. 1, aufgetragen in Abhängigkeit vom Winkel φ.

Figur 3 zeigt den Stator eines erfindungsgemäßen Drehwinkelsensors mit Primärwicklungen.

Figur 4A zeigt das Wickelschema der Primärwicklungen aus Figur 4, aufgetragen über die Nuten des Stators.

Figur 4B zeigt die Windungszahlen der Primärwicklungen aus Figur 4, aufgetragen über die Nuten des Stators.

Figur 4C zeigt das aus den Primärwicklungen aus Figur 3 resultierende Magnetfeld, aufgetragen über die Nuten des Stators.

Figur 5 zeigt eine mögliche Verteilung von Sekundärspulen auf den Zähnen des Stators aus Figur 3, aufgetragen über die Zähne des Stators.

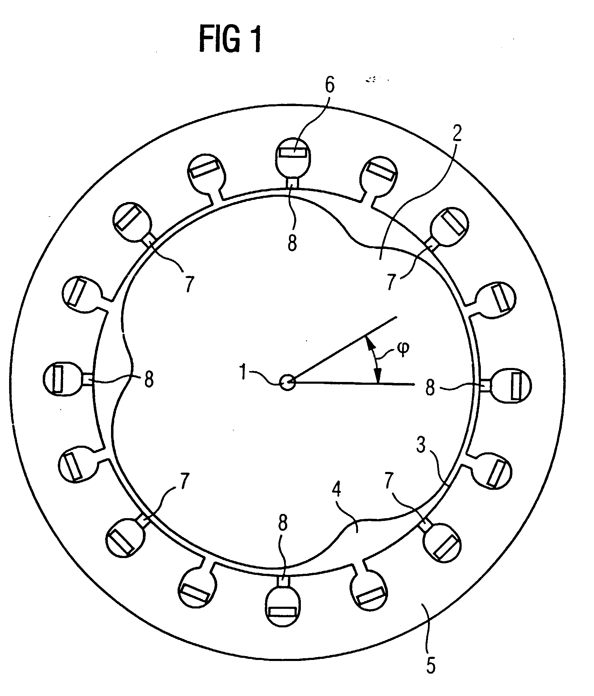

Figur 1 zeigt einen erfindungsgemäßen Drehwinkelsensor mit einem um die Achse 1 drehbaren magnetischen Rotor 2, zwischen dessen äußerer Begrenzungsfläche und der inneren Zylinderfläche eines hohlzylinderförmigen feststehenden Stators sich ein Luftspalt 4 befindet. Der Stator 5 weist in Nuten angeordnete Mittel 6 zur Erzeugung eines auf die Achse gerichteten Magnetfeldes B auf, welches den Luftspalt 4 abschnittsweise radial durchsetzt. Ferner sind am Stator 5 erste Magnetdetektoren 7 und zweite Magnetdetektoren 8 jeweils um 90° gegeneinander versetzt entlang des Kreises 3 angeordnet, der aus dem Schnitt der Zylinderfläche mit einer Ebene senkrecht zur Achse 1 entsteht. Diese Magnetdetektoren 7,8 detektieren das Magnetfeld B auf der Kreislinie 3. Das von den Magnetdetektoren 7, 8 gemessene Magnetfeld B hängt von dem magnetischen Widerstand R des Luftspalts 4 ab. Durch die gezeigte geometrische Gestaltung des Rotors 2 kann erreicht werden, daß der magnetische Widerstand R im Ruhezustand des Rotors 2 eine eindeutige Funktion des Winkels φ ist.

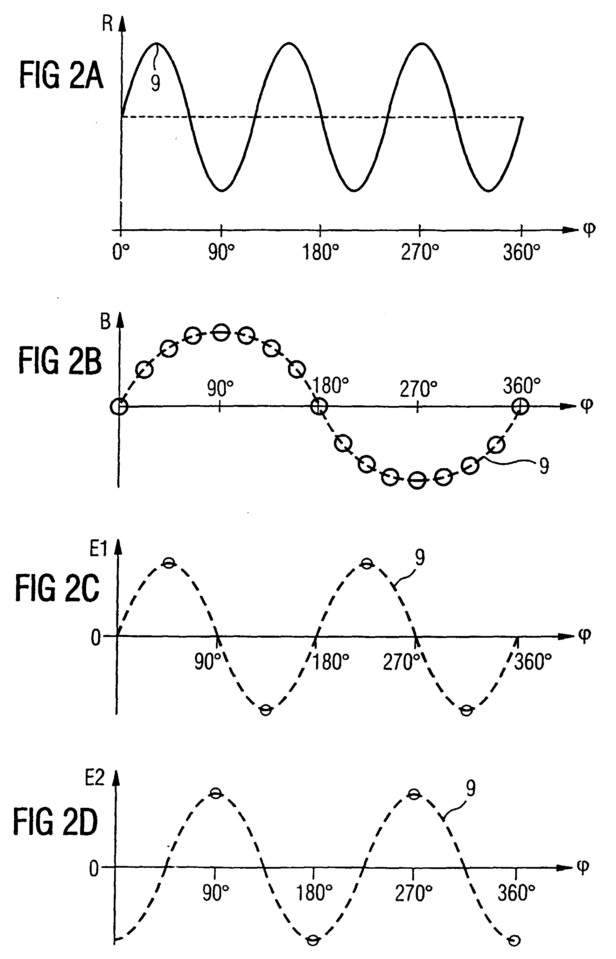

Figur 2A zeigt den Verlauf des magnetischen Widerstands R des Luftspalts 4 aus Figur 1 in Form einer vom Winkel φ abhängigen Sinuskurve 9.

Figur 2B zeigt den Verlauf des Magnetfeldes B auf der Zylinderoberfläche in Abhängigkeit vom Winkel φ. Das Magnetfeld B weist lokal endliche Amplituden auf, die durch die lokalisierten Mittel zu seiner Erzeugung hervorgerufen werden. Die Amplituden sind abwechselnd entgegengesetzt und von einer vom Winkel φ abhängigen Sinuskurve 9 einhüllbar.

Figur 2C zeigt den Verlauf der Empfindlichkeiten E1 der ersten Magnetsensoren 7 entlang einer Kreislinie (3) in Abhängigkeit vom Winkel φ. Die Empfindlichkeiten E1 sind von einer vom Winkel φ abhängigen Sinuskurve 9 einhüllbar.

Figur 2D zeigt die Verteilung der Empfindlichkeiten E2 der zweiten Magnetdetektoren 8. Die Empfindlichkeiten E2 sind von einer vom Winkel φ abhängigen Sinuskurve 9 einhüllbar. Die den Empfindlichkeiten E2 der zweiten Magnetdetektoren 8 zugeordnete Sinuskurve 9 ist gegenüber der den Empfindlichkeiten E1 der ersten Magnetdetektoren 7 zugeordneten Sinuskurve 9 um 90° verschoben. Dadurch kann das in den ersten Magnetdetektoren 7 hervorgerufene drehwinkelabhängige Signal dem Sinus des Drehwinkels φ und das in den zweiten Magnetdetektoren 8 induzierte Winkelsignal dem Kosinus des Drehwinkels φ zugeordnet werden, was die Auswertung des Drehwinkels φ erleichtert.

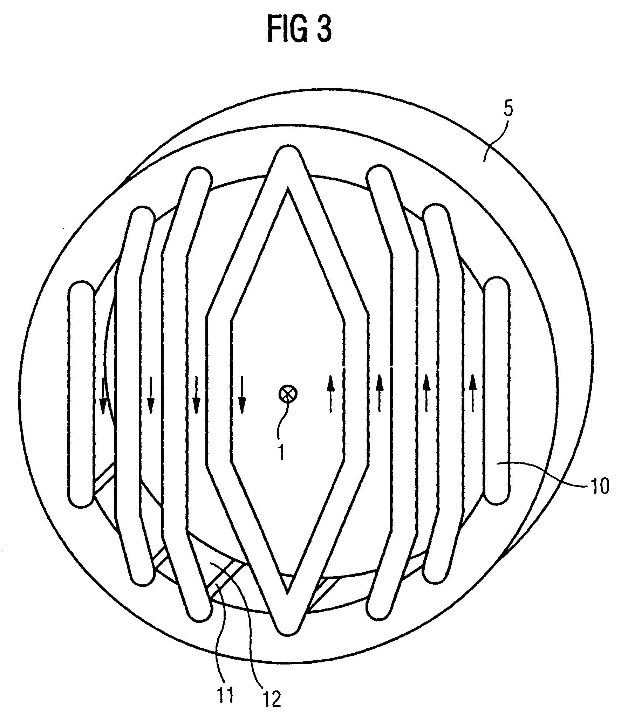

Figur 3 zeigt den Stator 5 eines erfindungsgemäßen Drehwinkelsensors 5, der die Form eines Hohlzylinders um die Achse 1 hat mit durch Zähne 12 voneinander getrennten Nuten 11, die radial von außen nach innen auf der Innenseite des Stators 5 verlaufen. Die Mittel zur Erzeugung des Magnetfeldes B sind in diesem Fall realisiert durch stromdurchflossene Primärwicklungen 10. Diese Primärwicklungen 10 sind in den Nuten 11 angeordnet. Die Primärwicklungen 10 verlaufen jeweils in zwei gegenüberliegenden Nuten 11, wobei die rechts in Figur 3 gezeigten Primärwicklungen 10 einen positiven und die links in Figur 3 gezeigten Primärwicklungen 10 eine negativen Wickelsinn aufweisen.

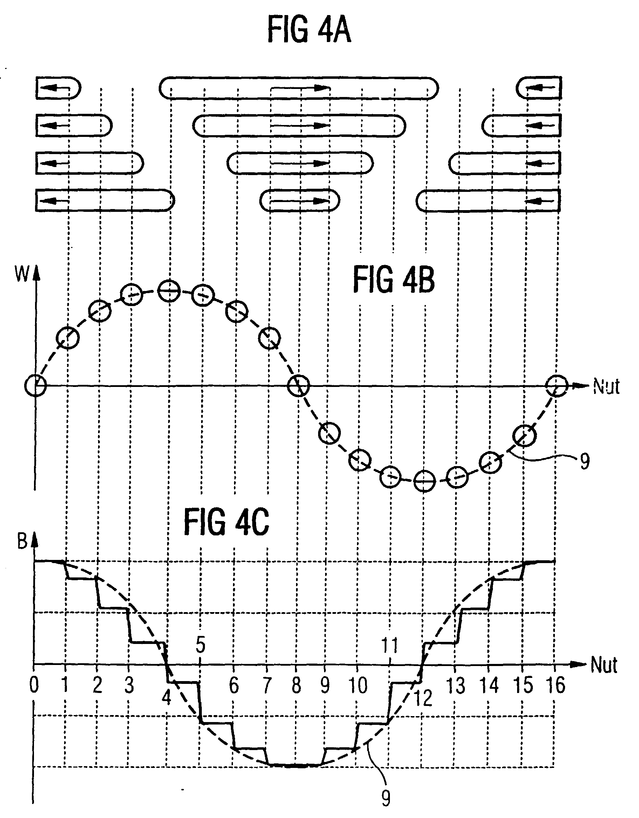

In Figur 4A ist die Abwicklung des Wickelschemas des in Figur 3 gezeigten Stators über die Nuten 11 dargestellt.

Figur 4B zeigt die Windungszahlen W der Primärwicklungen aufgetragen über die Nuten. Negative Windungszahlen W werden dabei durch entgegengesetzten Wickelsinn realisiert.

Figur 4C zeigt das aus der Bewicklung des Stators aus Figur 3 gemäß Figur 4A und Figur 4B resultierende Magnetfeld B über die Nuten aufgetragen. Man erkennt die gute Annäherung des Magnetfeldverlaufs an eine Sinuskurve 9, die dadurch ermöglicht wird, daß die Periode des Magnetfeldverlaufs P1 = 1 ist.

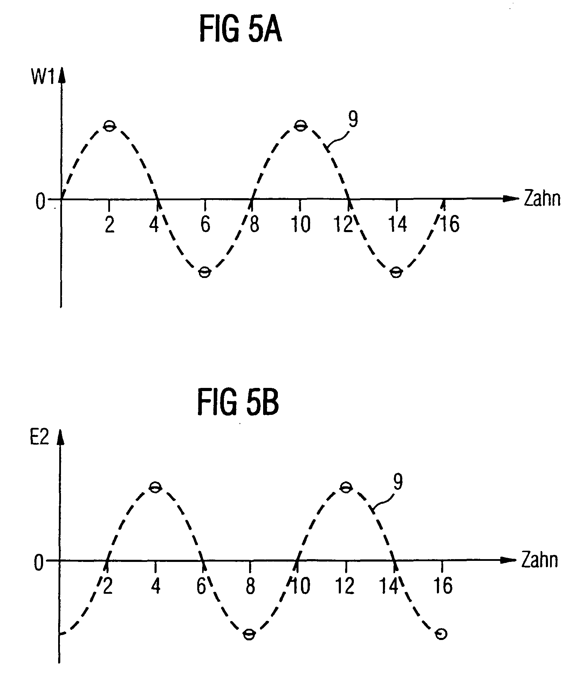

Figur 5A zeigt einen möglichen Verlauf der Windungszahlen W1 der ersten Sekundärspulen für den in Figur 3 dargestellten Stator. Die Anzahl der Windungen W1 der Spulen ist proportional zu deren Empfindlichkeit. Die ersten Sekundärspulen sind abwechselnd mit entgegengesetztem Wickelsinn gewickelt und äquidistant über die Zähne 12 des Stators verteilt. Wicklungen mit entgegengesetztem Wickelsinn sind negativ aufgetragen. Dadurch kommen sie auf einer Sinuskurve 9 zu liegen.

Figur 5B zeigt einen möglichen Verlauf der Windungszahlen W2 der zweiten Sekundärspulen für den in Figur 3 dargestellten Stator. Die zweiten Sekundärspulen sind abwechselnd mit entgegengesetztem Wickelsinn gewickelt und äquidistant über die Zähne 12 des Stators verteilt. Dadurch kommen sie auf einer Sinuskurve 9 zu liegen. Die den Windungszahlen W1 und den Windungszahlen W2 zugeordneten Sinuskurven 9 sind um 45° gegeneinander verschoben, wodurch ein dem cos(φ) bzw. sin(φ) proportionales Ausgangssignal in den Sekundärspulen realisiert wird.

Die Erfindung beschränkt sich nicht auf die beispielhaft gezeigten Ausführungsformen, sondern wird in ihrer allgemeinsten Form durch Anspruch 1 definiert.

**Patentansprüche**

1. Elektromagnetischer Drehwinkelsensor zur Erfassung eines Drehwinkels φ um eine Achse (1) mit

   einem um die Achse (1) drehbaren magnetischen Rotor (2) und einem feststehenden Stator (5), der Mittel (6) zur Erzeugung eines auf den Rotor (2) gerichteten Magnetfeldes (B) sowie wenigstens vier erste und wenigstens vier zweite Magnetdetektoren (7, 8) zur Detektion des Magnetfeldes (B) aufweist,
   bei dem der Rotor (2) und der Stator (5) sich so gegenüberstehen, daß sich zwischen ihnen ein vom Magnetfeld (B) durchsetzter Luftspalt ausbildet,
   bei dem die Empfindlichkeiten der ersten bzw.

zweiten Magnetdetektoren (7, 8) entlang eines Kreises (3) Werte aufweisen, die in der Abwicklung des Kreises (3) auf einer Geraden jeweils von einer Sinuskurve (9) mit P3 Perioden einhüllbar sind,

bei dem die Amplitude des Magnetfeldes (B) entlang des Kreises (3) Werte aufweist, die in der Abwicklung des Kreises (3) auf einer Geraden von einer Sinuskurve (9) mit P1 Perioden einhüllbar sind,

bei dem der magnetische Widerstand (R) des Luftspaltes (4) entlang des Kreises (3) eine Sinuskurve (9) mit P2 Perioden beschreibt,

bei dem die den zweiten Magnetdetektoren (8) zugeordnete Sinuskurve (9) aus der den ersten Magnetdetektoren (7) zugeordneten Sinuskurve (9) durch Verschiebung um eine 90°/P3 entsprechende Strecke entlang der Geraden hervorgeht, und

bei dem gilt: $P1 \neq P2 \neq P3$ und zugleich entweder $P1 + P2 = P3$ oder $|P1 - P2| = P3$.

2. Drehwinkelsensor nach Anspruch 1,

bei dem sich der Luftspalt (4) zwischen der äußeren Begrenzungsflache des Rotors (2) und der inneren Begrenzungsfläche des die Form eines Hohlzylinders um die Achse (1) aufweisenden Stators (5) befindet.

3. Drehwinkelsensor nach Anspruch 1 oder 2,

bei dem P1 = 1 ist.

4. Drehwinkelsensor nach Anspruch 1 bis 3,

bei dem die Sinuskurve (9) jeweils in der Form $A \times \sin\,(B \times \varphi + C)$ darstellbar ist.

5. Drehwinkelsensor nach Anspruch 1 bis 4,

bei dem die Mittel (6) zur Erzeugung des Magnetfeldes (B) eine oder mehrere stromdurchflossene Primärwicklungen (10) sind.

6. Drehwinkelsensor nach Anspruch 5,

bei dem die ersten und zweiten Magnetdetektoren (7, 8) erste bzw. zweite Sekundärspulen sind und bei dem die Primärwicklungen (10) von einem sinusförmig zeitlich veränderlichen Strom durchflossen sind.

7. Drehwinkelsensor nach Anspruch 2, 5 und 6,

bei dem die Primärwicklungen und/oder die Sekundärspulen in radial nach außen verlaufenden äquidistanten Nuten (11) in der inneren Begrenzungsfläche des Stators (5) angeordnet sind.

8. Drehwinkelsensor nach Anspruch 7,

bei dem die Zahl der Nuten = 16, P2 = 3 und P3 = 2 ist.

# FIG 1

FIG 2A

FIG 2B

FIG 2C

FIG 2D

# FIG 3

# FIG 4A

# FIG 4B

W

Nut

9

# FIG 4C

B

5   11

Nut

0 1 2 3 4 5 6 7 8 9 10 11 12 13 14 15 16

4   12

9

## FIG 5A

## FIG 5B

Europäisches
Patentamt

**EUROPÄISCHER RECHERCHENBERICHT**

Nummer der Anmeldung

EP 00 12 1091

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 631 510 A (NAGARKATTI ASHOK ET AL) 23. Dezember 1986 (1986-12-23) * Spalte 1, Zeile 8 – Spalte 2, Zeile 32 * * Spalte 8, Zeile 29 – Zeile 36 * * Abbildung 3 * ----- | 1-7 | G01D5/20 |
| | | | RECHERCHIERTE SACHGEBIETE (Int.Cl.7) |
| | | | G01D |

Der vorliegende Recherchenbericht wurde für alle Patentansprüche erstellt

| Recherchenort | Abschlußdatum der Recherche | Prüfer |
|---|---|---|
| DEN HAAG | 16. Januar 2001 | Lut, K |

**ANHANG ZUM EUROPÄISCHEN RECHERCHENBERICHT
ÜBER DIE EUROPÄISCHE PATENTANMELDUNG NR.**

EP 00 12 1091

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-01-2001

| Im Recherchenbericht angeführtes Patentdokument | Datum der Veröffentlichung | Mitglied(er) der Patentfamilie | Datum der Veröffentlichung |
|---|---|---|---|
| US 4631510 A | 23-12-1986 | KEINE | |

Für nähere Einzelheiten zu diesem Anhang : siehe Amtsblatt des Europäischen Patentamts, Nr. 12/82

EPO FORM P0461